# EUROPÄISCHE PATENTSCHRIFT

(11) **EP 3 478 953 B1**
(45) Veröffentlichungstag und Bekanntmachung des Hinweises auf die Patenterteilung: **15.07.2020**
(21) Anmeldenummer: 17721666.0
(22) Anmeldetag: 04.05.2017
(51) Int. Cl.: F02D 41/06, F02D 19/06, F02D 19/08, F02D 41/00

(54) **GASBRENNKRAFTMASCHINE MIT HILFSSTARTSYSTEM UND VERFAHREN ZUM BETREIBEN EINER GASBRENNKRAFTMASCHINE**
GAS INTERNAL COMBUSTION ENGINE WITH AUXILIARY STARTING SYSTEM, AND METHOD FOR OPERATING A GAS INTERNAL COMBUSTION ENGINE
MOTEUR À COMBUSTION INTERNE À GAZ COMPRENANT UN SYSTÈME DE DÉMARRAGE AUXILIAIRE ET PROCÉDÉ DE FONCTIONNEMENT DU MOTEUR À COMBUSTION INTERNE À GAZ

(30) Priorität: 30.06.2016 DE 102016211792
(43) Veröffentlichungstag der Anmeldung: 08.05.2019
(73) Patentinhaber: Vitesco Technologies GmbH, 30165 Hannover (DE)
(72) Erfinder: ANTE, Johannes, 93055 Regensburg (DE); HIEN, Markus, 92436 Bruck i. d. OPf. (DE)
(74) Vertreter: Waldmann, Georg Alexander
(86) Internationale Anmeldenummer: PCT/EP2017/060708
(87) Internationale Veröffentlichungsnummer: WO 2018/001606

(56) Entgegenhaltungen:
- EP-A1- 2 108 801
- EP-A1- 2 116 707
- EP-A2- 1 559 887
- CA-A1- 2 842 729
- DE-T5-112011 101 398
- US-A1- 2012 138 018

## Beschreibung

Die vorliegende Erfindung betrifft eine mit Erdgas betriebene Gasbrennkraftmaschine für Fahrzeuge, die ein Hilfsstartsystem aufweist, sowie ein Verfahren zum Betreiben einer Gasbrennkraftmaschine.

Zum Betreiben eines Fahrzeugs mit Erdgas, wie beispielsweise komprimiertem Erdgas (compressed natural gas, CNG), wird üblicherweise eine angepasste Brennkraftmaschine eingesetzt, die eine Erdgas-Luftmischung verbrennt. Für eine ordnungsgemäße Funktion des Katalysators ist es notwendig, dass der Motor das Erdgas-Luftgemisch vorzugsweise stöchiometrisch verbrennt, das heißt, dass die Brennkraftmaschine üblicherweise gemäß einer Lambdaregelung gesteuert wird, bei der der Lambdawert im zeitlichen Mittel bevorzugt den Wert 1 aufweist.

Üblicherweise wird eine mit Erdgas betriebene Brennkraftmaschine mit einem Flüssigkraftstoff, wie beispielsweise Benzin, gestartet und es wird erst nach einer kurzen Aufwärmzeit, wenn die Lambdasonde und die Lambdasteuerung wie gewünscht arbeiten, auf den Betrieb mit ausschließlich Erdgas umgeschaltet. Deshalb weisen mit Erdgas betriebene Brennkraftmaschinen neben einem Haupt-Erdgastank einen Hilfs-Flüssigkraftstofftank auf, in dem der zum Starten der Brennkraftmaschine notwendige Flüssigkraftstoff vorgehalten wird und in flüssigem Zustand den Verbrennungskammern zugeführt wird.

Damit eine mit Erdgas betriebene Brennkraftmaschine mit Erdgas gestartet werden kann, muss die Zusammensetzung des Erdgases möglichst genau bekannt sein, damit die Brennkraftmaschine in den ersten Minuten nicht zu viele unerwünschte Schadstoffe ausstößt. Da in den ersten Betriebsminuten noch keine Lambdawerte verfügbar sind, wird das Erdgas-Luft-Gemisch mittels voreingestellter Steuerung erzeugt. Da hier noch keine Erdgasqualität bekannt ist, weist das Erdgas-Luft-Gemisch zumeist nicht das für die Verbrennung optimale Verhältnis auf.

Erdgas besteht aus Methan, Kohlenstoffdioxid, Stickstoff und Anteile weiterer Gase, wie beispielsweise höhere Kohlenwasserstoffe. Ferner sinkt die Zündwilligkeit des Erdgases bei tiefen Temperaturen, wie z. B. unter 5°C. Jedoch soll dem Fahrer des Fahrzeugs gewährleistet werden, dass die Gasbrennkraftmaschine auch bei niedrigen Temperaturen zuverlässig gestartet werden kann.

Hierzu gibt es beispielsweise den Ansatz, mittels Vorheizsystemen das Erdgas zumindest teilweise auf eine gewünschte Temperatur zu erwärmen, bei der das Erdgas eine erfordliche Zündfähigkeit aufweist.

Ferner ist es bekannt, für schlecht startende Brennkraftmaschinen einen Startpilot einzusetzen, beispielsweise bei alten Motoren nach langer Standzeit, bei einem Start im Winter mit schlechter Batterie, bei Rasenmähern oder Kettensägen. Dabei kann in bestimmten Situationen, z. B. bei einer weitestgehend erschöpften Batterie, einem minderwertigen Kraftstoff oder bei extrem niedrigen Temperaturen, manuell eine Äthermischung mittels Sprühdosen in den Ansaugtrakt der Brennkraftmaschine gesprüht werden. Durch die hohe Zündwilligkeit der Äthermischung springt die Brennkraftmaschine sofort an und erreicht zügig hohe Drehzahlen. Sofern die Brennkraftmaschine und das zugehörige Kraftstoffeinspritz- und Gemischbildungssystem einigermaßen funktionieren, kann der Motor mit seinem Flüssigkraftstoff weiter betrieben werden.

Beispielsweise offenbart die GB 2 437 098 A einen Zweikraftstoffmotor mit jeweiligen Kraftstoffsteuerungen.

Aus der US 9 109 498 B2 ist ein Benzinmotor mit Dimethylether-Piloteinspritzung bekannt.

Die US 5 526 786 A beschreibt einen Zweikraftstoffmotor mit einer Steuerung zur Piloteinspritzung.

Die CN 103 883 414 A offenbart eine elektronische Einspritzvorrichtung mit Dimethylether und komprimierten Erdgas.

In der CA 2 842 729 A1 ist ein Verfahren zum Starten eines Verbrennungsmotors mit Selbstzündung und gasförmigen Kraftstoff unter Verwendung eines Pilotkraftstoffs beschrieben. Das Verfahren umfasst folgende Schritte: Bestimmen eines normalen Startzustands oder eines Kaltstartzustands; während des normalen Startzustands Einführen des Pilotkraftstoffs in eine Brennkammer der Brennkraftmaschine, wenn der Pilotkraftstoffdruck über einen ersten Druck ansteigt; während des Kaltstartzustands Einführung des Pilotkraftstoffs in die Brennkammer, wenn der Pilotkraftstoffdruck über einen zweiten Druck ansteigt, der höher als der erste Druck ist; und selektives Einleiten des gasförmigen Kraftstoffs in die Brennkammer.

Aus der EP 2 108 801 A1 ist eine elektronische Steuereinheit zur Steuerung eines Verbrennungsmotors bekannt, der mit einem ersten Kraftstoff oder einem zweiten Kraftstoff betrieben werden kann. Diese Steuereinheit ist gekennzeichnet durch - Steuern beider Kraftstoffsysteme, d. h. eines ersten Kraftstoffsystems und eines zweiten Kraftstoffsystems, - Überwachen der Leistung des Verbrennungsmotors durch eine Vielzahl von Sensoren, - Automatisches Umschalten vom ersten Kraftstoffsystem zum zweiten Kraftstoffsystem, wenn die Leistung des Verbrennungsmotors beim Betrieb mit dem ersten Kraftstoffsystem nicht wie erwartet ist. Die EP 1 559 887 A2 zeigt ein Verfahren zum Minimieren von NOx- und UHC-Emissionen in einem mit Zündbrennstoff gezündeten Gasbrennstoffmotor, umfassend die Schritte: Bestimmen einer Mindestmenge an Zündbrennstoff, die zum Zünden von gasförmigen Brennstoff in einer Brennkammer benötigt wird; Einspritzen des Pilotbrennstoffs in eine Vorkammer und/oder in die Brennkammer; Bestimmen eines Verbrennungsbeginnorts aus einem Ionisationssignal oder einem Zylinderdruck der Verbrennungskammer; Vergleichen des Verbrennungsbeginnorts mit einem gewünschten Verbrennungsbeginnort; und Einstellen eines Pilotkraftstoffeinspritzzeitpunkts, wenn der Verbrennungsstartort nicht ungefähr gleich dem gewünschten Verbrennungsstartort ist.

Der vorliegenden Erfindung liegt die Aufgabe zu Grunde, eine Gasbrennkraftmaschine bereitzustellen, die zu jeder Zeit zuverlässig gestartet und betrieben werden kann. Diese Aufgabe wird mit der Gasbrennkraftmaschine gemäß dem unabhängigen Anspruch 1 sowie dem Verfahren zum Betreiben einer Gasbrennkraftmaschine gemäß dem unabhängigen Anspruch 7 gelöst. Bevorzugte Ausgestaltungen sind in den Unteransprüchen angegeben.

Der vorliegenden Erfindung liegt im Wesentlichen der Gedanke zu Grunde, dass eine Gasbrennkraftmaschine, die vorzugsweise mit Erdgas betrieben wird, in bestimmten Situationen, insbesondere bei sehr niedrigen Temperaturen, schlecht gestartet werden kann. Damit eine solche Gasbrennkraftmaschine zuverlässig gestartet werden kann, wird vorgeschlagen, bei einem Erfassen einer solchen Situation einen Hilfskraftstoff, wie beispielsweise Dimethylether, in die Verbrennungsräume der Gasbrennkraftmaschine einzuspritzen und somit das Starten der Gasbrennkraftmaschine zu fördern. Der Hilfskraftstoff zeichnet sich dadurch aus, dass dieser zwar in flüssigem Zustand unter Druck vorgehalten wird, jedoch beim Zuführen in die Verbrennungskammern vergast, d. h. in den gasförmigen Zustand wechselt, in dem der Hilfskraftstoff eine hohe Zündwilligkeit aufweist.

Eine erfindungsgemäße Gasbrennkraftmaschine für Fahrzeuge weist hiermit zumindest eine Verbrennungskammer, die dazu ausgebildet ist, ein Luft-Gaskraftstoff-Gemisch zum Verbrennen desselben darin zu empfangen, ein Einlassverteilerrohr, das mit der zumindest einen Verbrennungskammer fluidverbunden und dazu ausgebildet ist, das Luft-Gaskraftstoff-Gemisch der zumindest einen Verbrennungskammer an vorbestimmten Zeitpunkten zum Verbrennen zuzuführen und ein Hilfsstartsystem zum Starten der Gasbrennkraftmaschine auf. Das Hilfsstartsystem umfasst einen Hilfskraftstofftank, der dazu ausgebildet ist, einen Hilfskraftstoff zu speichern, ein Steuerungsventil, das dazu ausgebildet ist, eine Verbindung zwischen den Hilfskraftstofftank und dem Einlassverteilerrohr zu öffnen oder zu schließen, einen Umgebungstemperatursensor, der dazu ausgebildet ist, ein Signal zu erzeugen, das die Umgebungstemperatur der Gasbrennkraftmaschine anzeigt, einen Kurbelwellendrehzahlsensor auf, der dazu ausgebildet ist, ein Signal zu erzeugen, das die Kurbelwellendrehzahl einer Kurbelwelle der Gasbrennkraftmaschine anzeigt, und eine Steuerungseinheit, die dazu ausgebildet ist, das Signal von dem Umgebungstemperatursensor und dem Kurbelwellendrehzahlsensor zu empfangen und das Steuerungsventil zum Öffnen zu steuern, so dass Hilfskraftstoff aus dem Hilfskraftstofftank in das Einlassverteilerrohr zum Starten der Gasbrennkraftmaschine zugeführt wird, wenn die Umgebungstemperatur kleiner als ein vorgegebener Umgebungstemperaturschwellenwert ist. Dabei ist die Steuerungseinheit ferner dazu ausgebildet, das Steuerungsventil solange zum Öffnen zu steuern, bis die Kurbelwellendrehzahl größer als ein vorbestimmter Kurbelwellendrehzahlschwellenwert ist.

Der Hilfskraftstoff ist vorzugsweise ein Gaskraftstoff mit einer höheren Zündwilligkeit als der Hauptgaskraftstoff, mit dem die Gasbrennkraftmaschine im normalen Betrieb betrieben wird. Beispielsweise ist der Hilfskraftstoff Dimethylether. In alternativen Ausgestaltungen kann der Hilfskraftstoff außerdem Benzin sein.

Sobald die vorbestimmte Kurbelwellendrehzahl erreicht ist, steuert die Steuerungseinheit das Steuerungsventil zum Schließen und es wird die Zufuhr des Hilfskraftstoffs unterbrochen. Ab diesem Zeitpunkt kann die Gasbrennkraftmaschine ausschließlich mit dem Hauptgasbrennkraftstoff betrieben werden. Zu diesem Zeitpunkt kann nämlich davon ausgegangen werden, dass mit dem Überschreiten des vorbestimmten Kurbelwellendrehzahlschwellenwerts ein Betriebszustand der Brennkraftmaschine erreicht ist, an dem die Gasbrennkraftmaschine zuverlässig mit ausschließlich dem Hauptgasbrennkraftstoff betrieben werden kann.

In einer weiteren bevorzugten Ausgestaltung weist die Gasbrennkraftmaschine ferner eine Vorrichtung auf, die dazu ausgebildet ist, die Zündungsfähigkeit innerhalb der zumindest einen Verbrennungskammer zu erfassen. Dabei ist die Steuerungseinheit dazu ausgebildet, während dem Betrieb der Gasbrennkraftmaschine das Steuerungsventil zum Öffnen zu steuern, so dass Hilfskraftstoff aus dem Hilfskraftstofftank in das Einlassverteilerrohr zum Betreiben der Gasbrennkraftmaschine zugeführt wird, wenn die erfasste Zündungsfähigkeit kleiner als eine vorbestimmte Zündungsfähigkeit ist.

Die Vorrichtung zum Erfassen der Zündungsfähigkeit innerhalb der zumindest einen Verbrennungskammer ist beispielsweise ein Flammenionisationssensor, der dazu ausgebildet ist, die Zündstrecke der Zündvorrichtung unmittelbar nach dem Zünden als Ionenstromsensor zu erfassen. Wenn dabei ein Ionenstrom erfasst wird, kann davon ausgegangen werden, dass eine ordnungsgemäße Zündung innerhalb der zumindest einen Verbrennungskammer stattgefunden hat. Ferner kann die Vorrichtung zum Erfassen der Zündungsfähigkeit ein Kurbelwellendrehzahlsensor, der die Kurbelwellendrehzahl erfasst und, wenn die Kurbelwellendrehzahl im Wesentlichen nicht konstant ist, eine niedrige Zündungsfähigkeit anzeigt, oder ein Zylinderdrucksensor sein, der den Druck innerhalb der zumindest einen Verbrennungskammer anzeigt und, wenn der Zylinderdruck außerhalb eines vorbestimmten Bereichs liegt, eine niedrige Zündungsfähigkeit anzeigt.

Mit Hilfe des Verbrennungskammertemperatursensors kann in jeder Verbrennungskammer überwacht werden, ob eine gewünschte Verbrennung darin stattfindet. Wenn in einem der Verbrennungsräume das Luft-Gasbrennkraftstoff-Gemisch nicht ordentlich zündet, kann dies mit dem Verbrennungskammertemperatursensor erfasst werden und während dem Betrieb von dem Hauptgasbrennkraftstoff zu dem Hilfskraftstoff umgeschaltet werden bzw. der Hilfskraftstoff kann dem Luft-Hauptgaskraftstoff beigemengt werden, um die Zündwilligkeit und somit den Betrieb der Gasbrennkraftmaschine zu fördern.

In einer weiteren vorteilhaften Ausgestaltung weist die erfindungsgemäße Gasbrennkraftmaschine ferner einen Hauptgaskraftstoffqualitätssensor auf, der dazu ausgebildet ist, ein Signal zu erfassen, das die Qualität des Hauptgaskraftstoffs anzeigt. Dabei ist die Steuerungseinheit ferner dazu ausgebildet, während dem Betrieb der Gasbrennkraftmaschine das Steuerungsventil zum Öffnen zu steuern, so dass Hilfskraftstoff aus dem Hilfskraftstofftank in das Einlassverteilerrohr zum Betreiben der Gasbrennkraftmaschine zugeführt wird, wenn die Hauptgaskraftstoffqualität außerhalb eines vorbestimmten Hauptgaskraftstoffqualitätsbereichs liegt.

Beispielsweise ist dies von Vorteil, wenn in gewissen Betriebszuständen die Qualität des Hauptgaskraftstoffs nur ungenügend vorliegt bzw. der Hauptgaskraftstoffqualitätssensor fehlerhaft ist. Um in solchen Betriebszuständen die Gasbrennkraftmaschine zuverlässig weiterbetreiben bzw. starten zu können, kann mit Hilfe der Steuerungseinheit der zündwillige Hilfskraftstoff zusätzlich oder alternativ in das Einlassverteilerrohr zum Betreiben bzw. Starten der Gasbrennkraftmaschine zugeführt werden.

In einer weiteren bevorzugten Ausgestaltung weist die erfindungsgemäße Brennkraftmaschine ein am Einlassverteilerrohr angeordneten Luftmassenmesser auf, der dazu ausgebildet ist, ein Signal zu erzeugen, das die in das Einlassverteilerrohr einströmende Verbrennungsluftmasse anzeigt. Daher ist die Steuerungseinheit dazu ausgebildet, die Öffnungszeit des Steuerungsventils derart einzustellen, dass eine für die in das Einlassverteilerrohr einströmende Verbrennungsluftmasse stöchiometrisch erforderliche Hilfskraftstoffmenge aus dem Hilfskraftstofftank in das Einlassverteilerrohr zugeführt wird.

Unter Kenntnis der in das Einlassverteilerrohr zugeführten Hilfskraftstoffmenge kann mittels der Steuerungseinheit die hierzu für eine stöchiometrische Verbrennung notwendige Verbrennungsluftmasse ermittelt und eingestellt werden.

In einer vorteilhaften Ausgestaltung der Gasbrennkraftmaschine ist ferner eine Zündvorrichtung vorgesehen, die dazu ausgebildet ist, das Luft-Hauptgaskraftstoff-Gemisch und/oder das Luft-Hilfskraftstoff-Gemisch und/oder das Luft-Hauptgaskraftstoff-Hilfskraftstoff-Gemisch innerhalb der zumindest einen Verbrennungskammer zu entzünden. Beispielsweise kann die Zündvorrichtung eine Zündkerze, Glühkerze oder eine sonstige im Stand der Technik bekannte Zündvorrichtung sein.

Gemäß einem weiteren Aspekt der vorliegenden Erfindung ist ein Verfahren zum Betreiben einer Gasbrennkraftmaschine offenbart, die zumindest eine Verbrennungskammer, die dazu ausgebildet ist, ein Luft-Gaskraftstoff-Gemisch zum Verbrennen desselben darin zu empfangen, und ein Einlassverteilerrohr aufweist, das mit dem zumindest einen Verbrennungskammer fluidverbunden und dazu ausgebildet ist, das Luft-Gaskraftstoff-Gemisch der zumindest einen Verbrennungskammer an vorbestimmten Zeitpunkten zum Verbrennen zuzuführen. Das erfindungsgemäße Verfahren umfasst ein Erfassen der Umgebungstemperatur der Gasbrennkraftmaschine, ein Erfassen der Kurbelwellendrehzahl einer Kurbelwelle der Gasbrennkraftmaschine und ein Zuführen von Hilfskraftstoff in das Einlassverteilerrohr zum Starten der Gasbrennkraftmaschine, wenn die Umgebungstemperatur kleiner als ein vorbestimmter Umgebungstemperaturschwellenwert ist. Der Hilfskraftstoff wird solange in das Einlassverteilerrohr zugeführt, bis die Kurbelwellendrehzahl größer als ein vorbestimmter Kurbelwellendrehzahlschwellenwert ist.

In einer bevorzugten Ausgestaltung weist das erfindungsgemäße Verfahren ferner ein Erfassen der Verbrennungskammertemperatur innerhalb der zumindest einen Verbrennungskammer auf. Dabei wird Hilfskraftstoff während dem Betrieb der Gasbrennkraftmaschine dann in das Einlassverteilerrohr zum Betreiben der Gasbrennkraftmaschine zugeführt, wenn die Verbrennungskammertemperatur kleiner als ein vorbestimmter Verbrennungskammertemperaturschwellenwert ist. Somit kann während des Betriebs der Brennkraftmaschine auf für den Hauptgaskraftstoff ungünstige Zündbedingungen rasch reagiert werden, in dem der zündfreudige Hilfskraftstoff der zumindest einen Verbrennungskammer zugeführt wird.

Weitere Merkmale und Aufgaben der Erfindung werden dem Fachmann durch Ausüben der vorliegenden Lehre und Betrachten der beigefügten Zeichnungen ersichtlich, in denen:
- Fig. 1: schematisch eine erfindungsgemäße Gasbrennkraftmaschine zeigt, und
- Fig. 2: schematisch ein beispielhaftes Verfahren zum Betreiben einer Gasbrennkraftmaschine darstellt.

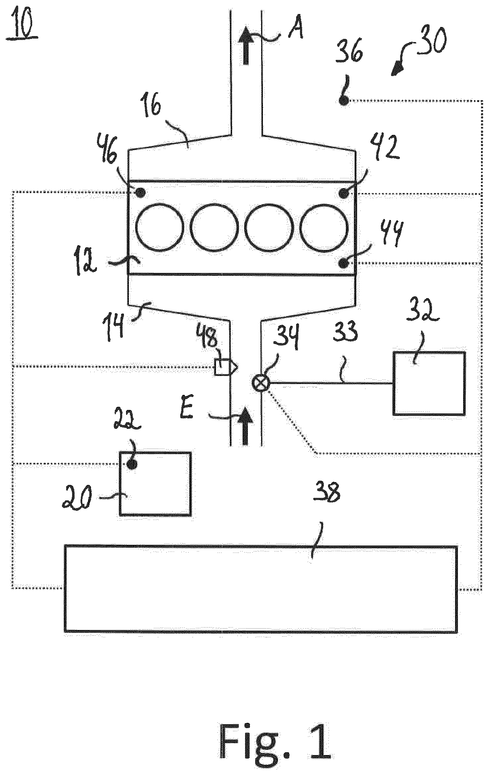

Die in der Fig. 1 schematisch dargestellte Gasbrennkraftmaschine 10 weist einen Motorblock 12 mit darin gebildeten Verbrennungsräumen (nicht explizit dargestellt) auf. Ferner sind ein Einlassverteilerrohr 14 sowie ein Auslassverteilerrohr 16 vorgesehen. Das Einlassverteilerrohr 14 ist dazu ausgebildet, jedem der Verbrennungsräume ein Luft-Gaskraftstoff-Gemisch zuzuführen. Die Verbrennungsluft wird über einen Luftfilter (nicht explizit dargestellt) dem Einlassverteilerrohr 14 zugeführt. Der Hauptgaskraftstoff stammt aus einem Hauptgaskraftstofftank 20, der mit dem Einlassverteilerrohr 14 fluidverbunden ist und mittels eines Steuerungsventils eine vorbestimmte Menge an Hauptgaskraftstoff, wie beispielsweise Erdgas, dem Einlassverteilerrohr 14 zur Verbrennung zuführen kann. In der Fig. 1 ist die Strömungsrichtung des Luft-Gaskraftstoff-Gemischs innerhalb des Einlassverteilerrohrs 14 mit einem Pfeil E angezeigt. Außerdem ist in der Fig. 1 die Strömungsrichtung des Abgases im Auslassverteilerrohr 16 mittels des Pfeils A angezeigt.

Die Gasbrennkraftmaschine 10 der Fig. 1 weist ferner ein Hilfsstartsystem 30 zum Starten der Gasbrennkraftmaschine 10 auf. Das Hilfsstartsystem 30 weist einen Hilfskraftstofftank 32, der dazu ausgebildet ist, einen Hilfskraftstoff zu speichern, ein Steuerungsventil 34, das dazu ausgebildet ist, eine Verbindung zwischen dem Hilfskraftstofftank 32 und dem Einlassverteilerrohr 14 zu öffnen oder zu schließen, einen Umgebungstemperatursensor 36, der dazu ausgebildet ist, ein Signal zu erzeugen, das die Umgebungstemperatur der Gasbrennkraftmaschine 10 anzeigt, und eine Steuerungseinheit 38 auf.

Insbesondere ist der Hilfskraftstofftank 32 mittels einer Verbindungsleitung 33 mit dem Einlassverteilerrohr 14 fluidverbunden. Dabei ist das Steuerungsventil 34 bevorzugt in der Verbindungsleitung 33 angeordnet und dazu ausgebildet, die Verbindungsleitung 33 zu öffnen und zu schließen. Beispielsweise ist das Steuerungsventil 34 ein magnetbetätigtes Einspritzventil zum stufenlosen Einstellen der in das Einlassverteilerrohr 14 zugeführten Hilfskraftstoffmenge, die unter Druck in flüssigem Zustand eingespritzt wird und beim Einspritzen vergast.. Durch den Öffnungsquerschnitt und dem Druck des Hilfskraftstoffs kann der Massendurchsatz ermittelt werden, der mittels des Einspritztimings gesteuert werden kann. Je kürzer eingespritzt wird, desto geringer ist die in das Einlassverteilerrohr 14 zugeführte Menge an Hilfskraftstoff. Zum Zuführen des Hilfskraftstoffs in das Einlassverteilerrohr 14 kann eine Hilfskraftstoffpumpe (nicht explizit gezeigt) bereitgestellt sein, die den unter Druck im Hilfskraftstofftank 20 gespeicherten Hilfskraftstoff in flüssigem Zustand fördert.

Der Umgebungstemperatursensor 36 ist vorzugsweise an einer Position angeordnet, an der die Umgebungstemperatur der Gasbrennkraftmaschine 10 bzw. des Fahrzeugs, in dem die Gasbrennkraftmaschine 10 angeordnet ist, zu erfassen.

Das Hilfsstartsystem 30 der Fig. 1 weist ferner einen Kurbelwellendrehzahlsensor 42, der dazu ausgebildet ist, ein Signal zu erzeugen, das die Kurbelwellendrehzahl einer Kurbelwelle der Gasbrennkraftmaschine 10 anzeigt, einen Verbrennungskammertemperatursensor 44, der dazu ausgebildet ist, ein Signal zu erzeugen, das die Verbrennungskammertemperatur innerhalb der zumindest einen Verbrennungskammer anzeigt, und einen Kühlwassertemperatursensor 46 auf, der dazu ausgebildet ist, ein Signal zu erzeugen, das die Kühlwassertemperatur des im Motorblock 12 zirkulierenden Kühlwassers anzeigt.

Ferner weist die Gasbrennkraftmaschine 10 einen Luftmassenmesser 48 auf, der dazu ausgebildet ist, ein Signal zu erzeugen, das die in das Einlassverteilerrohr 14 einströmende Verbrennungsluftmasse anzeigt.

Die Gasbrennkraftmaschine 10 der Fig. 1 weist ferner einen Hauptgaskraftstoffqualitätssensor 22 auf, der dazu ausgebildet ist, die Qualität des im Hauptgaskraftstofftank 20 vorrätigen Hauptgaskraftstoffs zu erfassen.

In der Fig. 1 ist schematisch dargestellt, dass der Umgebungstemperatursensor 36, der Kurbelwellendrehzahlsensor 42, der Verbrennungskammertemperatursensor 44, der Kühlwassertemperatursensor 46, der Luftmassenmesser 48 und der Gaskraftstoffqualitätssensor 22 mit geeigneten Mitteln mit der Steuerungseinheit 38 verbunden sind und somit jeweils die einzelnen Signale an die Steuerungseinheit 38 übermitteln können. Die Steuerungseinheit 38 wiederum ist dazu ausgebildet, die einzelnen Signale der jeweiligen Sensoren zu empfangen und zumindest teilweise zu verarbeiten. Die Steuerungseinheit 38 kann eine separate Steuerungseinheit sein oder kann in die Motorsteuerung des Fahrzeugs integriert sein.

Ferner ist das Steuerungsventil 34 mit der Steuerungseinheit 38 verbunden. Die Steuerungseinheit 38 kann durch Übermitteln eines entsprechenden Signals das Steuerungsventil 34 zum Öffnen oder zum Schließen steuern.

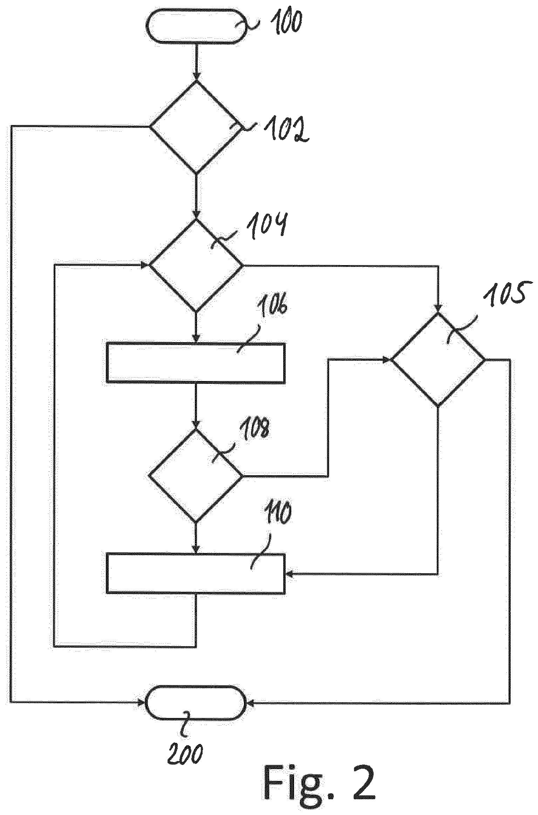

Im Folgenden wird unter zusätzlichen Verweis auf die Fig. 2 ein beispielhafter Betrieb der Gasbrennkraftmaschine 10 beschrieben, insbesondere vor einem Start der Gasbrennkraftmaschine 10.

Das Verfahren gemäß der Fig. 2 beginnt beim Schritt 100 und gelangt dann zum Schritt 102, an dem abgefragt wird, ob ein Zündschlüssel des Fahrzeugs eingesteckt worden ist. Wird beim Schritt 102 bestimmt, dass kein Zündschlüssel eingesteckt worden ist, gelangt das Verfahren zum Schritt 200 und wird dort beendet.

Wird jedoch beim Schritt 102 bestimmt, dass ein Zündschlüssel eingesteckt worden ist, gelangt das Verfahren zum Schritt 104, an dem abgefragt wird, ob sich die Kurbelwellendrehzahl unterhalb eines Kurbelwellendrehzahlschwellenwerts befindet. Da an diesem Zeitpunkt die Gasbrennkraftmaschine 10 noch nicht gestartet ist, kann an diesem Punkt davon ausgegangen werden, dass die Kurbelwellendrehzahl beim Schritt 104 kleiner als der vorbestimmte Kurbelwellendrehzahlschwellenwert ist.

In diesem Fall gelangt das Verfahren zum Schritt 106 und es werden die jeweiligen Signale der Sensoren 22, 36, 42, 44, 46, 48 (siehe Fig. 1) von der Steuerungseinheit 38 empfangen und zumindest teilweise verarbeitet.

Beim darauffolgenden Schritt 108 wird beispielsweise abgefragt, ob die Umgebungstemperatur kleiner als ein vorbestimmter Umgebungstemperaturschwellenwert, wie beispielsweise -5° C, ist. Insbesondere ist der vorbestimmte Umgebungstemperaturschwellenwert derart gewählt, dass bei einem Unterschreiten dieses Schwellenwerts kein zuverlässiges Starten der Gasbrennkraftmaschine mit dem Hauptgasbrennkraftstoff aus dem Gasbrennkraftstofftank 20 gewährleistet werden kann. Wenn die Umgebungstemperatur größer als der vorbestimmte Umgebungstemperaturschwellenwert ist, gelangt das Verfahren zum Schritt 105.

Wenn jedoch beim Schritt 108 bestimmt wird, dass die Umgebungstemperatur kleiner als der vorbestimmte Umgebungstemperaturschwellenwert ist, gelangt das Verfahren zum Schritt 110 und die Steuerungseinheit 38 steuert das Steuerungsventil 34 zum Öffnen. Dabei wird Hilfskraftstoff aus dem Hilfskraftstofftank 32 dem Einlassverteilerrohr 14 zugeführt, was unmittelbar dazu führt, dass der Hilfskraftstoff in die Verbrennungsräume geführt wird. Da der Hilfskraftstoff eine höhere Zündwilligkeit als der Hauptgaskraftstoff aus dem Hauptgaskraftstofftank 20 aufweist, kann die Gasbrennkraftmaschine 10 zuverlässig gestartet werden.

Nach dem Schritt 110 gelangt das Verfahren wieder zum Schritt 104, an dem abgefragt wird, ob die Kurbelwellendrehzahl immer noch unterhalb des Kurbelwellendrehzahlschwellenwerts ist. Das Zuführen des Hilfskraftstoffs soll nämlich solange erfolgen, bis die Kurbelwellendrehzahl den vorbestimmten Kurbelwellendrehzahlschwellenwert überschreitet.

Wird am Schritt 104 bestimmt, dass die Kurbelwellendrehzahl größer als der Kurbelwellendrehzahlschwellenwert ist, gelangt das Verfahren zum Schritt 105, an dem die Kurbelwellendrehzahl weiter ausgewertet wird. An dieser Stelle werden nochmals die Parameter, die von den Signalen der Sensoren 22, 44, 46 und 48 angezeigt werden, der Gasbrennkraftmaschine 10 ausgewertet, insbesondere die Verbrennungskammertemperatur.

Wird nämlich während des Betriebs der Gasbrennkraftmaschine, das heißt, nach einem erfolgreichen Start der Gasbrennkraftmaschine, festgestellt, dass die Verbrennungen innerhalb der Verbrennungsräume nicht mehr optimal sind (Schritt 105), kann von einem Betrieb ausschließlich mit Hauptgasbrennkraftstoff zu einem teilweisen oder ausschließlichen Betrieb mit Hilfskraftstoff umgeschaltet werden (Schritt 110), damit die Gasbrennkraftmaschine 10 wieder in einen gewünschten Betrieb mit gewünschter Kurbelwellendrehzahl gelangt.

Wird beim Schritt 105 bestimmt, dass sämtliche Parameter in Ordnung sind, gelangt das Verfahren zum Schritt 200 und wird beendet. An diesem Punkt des Verfahrens wird das Steuerventil 34 weder geschlossen und auf einen Betrieb mit ausschließlich Gasbrennkraftstoff umgeschaltet.

## Patentansprüche

1. Gasbrennkraftmaschine (10) für Fahrzeuge, mit:
- zumindest einer Verbrennungskammer, die dazu ausgebildet ist, ein Luft-Gaskraftstoff-Gemisch zum Verbrennen desselben darin zu empfangen,
- einem Einlassverteilerrohr (14), das mit der zumindest einen Verbrennungskammer fluidverbunden und dazu ausgebildet ist, das Luft-Gaskraftstoff-Gemisch der zumindest einen Verbrennungskammer an vorbestimmten Zeitpunkten zum Verbrennen zuzuführen, und
- einem Hilfsstartsystem (30) zum Starten der Gasbrennkraftmaschine (10), wobei das Hilfsstartsystem (30) aufweist:
- einen Hilfskraftstofftank (32), der dazu ausgebildet ist, einen Hilfskraftkraftstoff zu speichern,
- ein Steuerungsventil (34), das dazu ausgebildet ist, eine Verbindung zwischen dem Hilfskraftstofftank (32) und dem Einlassverteilerrohr (14) zu öffnen oder zu schließen,
- einen Umgebungstemperatursensor (36), der dazu ausgebildet ist, ein Signal zu erzeugen, das die Umgebungstemperatur der Gasbrennkraftmaschine (10) anzeigt,
- einen Kurbelwellendrehzahlsensor (42), der dazu ausgebildet ist, ein Signal zu erzeugen, das die Kurbelwellendrehzahl einer Kurbelwelle der Gasbrennkraftmaschine (10) anzeigt, und
- eine Steuerungseinheit (38), die dazu ausgebildet ist, das Signal von dem Umgebungstemperatursensor (36) und das Signal von dem Kurbelwellendrehzahlsensor (42) zu empfangen und das Steuerungsventil (34) zum Öffnen zu steuern, so dass Hilfskraftstoff aus dem Hilfskraftstofftank (32) in das Einlassverteilerrohr (14) zum Starten der Gasbrennkraftmaschine (10) zugeführt wird, wenn die Umgebungstemperatur kleiner als ein vorbestimmter Umgebungstemperaturschwellenwert ist
wobei die Steuerungseinheit (38) ferner dazu ausgebildet ist, das Steuerungsventil (34) solange zum Öffnen zu steuern, bis die Kurbelwellendrehzahl größer als ein vorbestimmter Kurbelwellendrehzahlschwellenwert ist.

2. Gasbrennkraftmaschine (10) nach Anspruch 1, ferner mit einer Vorrichtung zum Erfassen der Zündungsfähigkeit innerhalb der zumindest einen Verbrennungskammer,
wobei die Steuerungseinheit (38) ferner dazu ausgebildet ist, während dem Betrieb der Gasbrennkraftmaschine (10) das Steuerungsventil (34) zum Öffnen zu steuern, so dass Hilfskraftstoff aus dem Hilfskraftstofftank (34) in das Einlassverteilerrohr (14) zum Betreiben der Gasbrennkraftmaschine (10) zugeführt wird, wenn die die erfasste Zündungsfähigkeit kleiner als eine vorbestimmte Zündungsfähigkeit ist.

3. Gasbrennkraftmaschine (10) nach einem der vorhergehenden Ansprüche, ferner mit einem Hauptgaskraftstoffqualitätssensor (22), der dazu ausgebildet ist, ein Signal zu erfassen, das die Qualität des Hauptgaskraftstoffs anzeigt,
wobei die Steuerungseinheit (38) ferner dazu ausgebildet ist, während dem Betrieb der Gasbrennkraftmaschine (10) das Steuerungsventil (34) zum Öffnen zu steuern, so dass Hilfskraftstoff aus dem Hilfskraftstofftank (32) in das Einlassverteilerrohr (14) zum Betreiben der Gasbrennkraftmaschine (10) zugeführt wird, wenn die Gaskraftstoffqualität außerhalb eines vorbestimmten Gaskraftstoffqualitätsbereichs liegt.

4. Gasbrennkraftmaschine (10) nach einem der vorhergehenden Ansprüche, ferner mit einem am Einlassverteilerrohr (14) angeordneten Luftmassenmesser (48), der dazu ausgebildet ist, ein Signal zu erzeugen, das die in das Einlassverteilerrohr (14) einströmende Verbrennungsluftmasse anzeigt,
wobei die Steuerungseinheit (38) dazu ausgebildet ist, die Öffnungszeit des Steuerungsventils (34) derart einzustellen, dass eine für die in das Einlassverteilerrohr (14) einströmende Verbrennungsluftmasse stöchiometrisch erforderliche Hilfskraftstoffmenge aus dem Hilfskraftstofftank (32) in das Einlassverteilerrohr (14) zugeführt wird.

5. Gasbrennkraftmaschine (10) nach einem der vorhergehenden Ansprüche, wobei der Hilfskraftstoff Dimethylether aufweist.

6. Gasbrennkraftmaschine (10) nach einem der vorhergehenden Ansprüche, ferner mit zumindest einer Zündvorrichtung, die dazu ausgebildet ist, das Luft-Hauptgaskraftstoff-Gemisch und/oder das Luft-Hilfskraftstoff-Gemisch und/oder das Luft-Hauptgaskraftstoff-Hilfskraftstoff-Gemisch innerhalb der zumindest einen Verbrennungskammer zu entzünden.

7. Verfahren zum Betreiben einer Gasbrennkraftmaschine (10), die zumindest eine Verbrennungskammer, die dazu ausgebildet ist, ein Luft-Gaskraftstoff-Gemisch zum Verbrennen desselben darin zu empfangen, und ein Einlassverteilerrohr (14) aufweist, das mit der zumindest einen Verbrennungskammer fluidverbunden und dazu ausgebildet ist, das Luft-Hauptgaskraftstoff-Gemisch der zumindest einen Verbrennungskammer an vorbestimmten Zeitpunkten zum Verbrennen zuzuführen, wobei das Verfahren die Schritte umfasst:
- Erfassen der Umgebungstemperatur der Gasbrennkraftmaschine (10),
- Erfassen der Kurbelwellendrehzahl einer Kurbelwelle der Gasbrennkraftmaschine (10), und
- Zuführen von Hilfskraftstoff in das Einlassverteilerrohr (14) zum Starten der Gasbrennkraftmaschine (10), wenn die Umgebungstemperatur kleiner als ein vorbestimmter Umgebungstemperaturschwellenwert ist,
wobei der Hilfskraftstoff solange in das Einlassverteilerrohr (14) zugeführt wird, bis die Kurbelwellendrehzahl größer als ein vorbestimmter Kurbelwellendrehzahlschwellenwert ist.

8. Verfahren nach Anspruch 7, ferner mit:
- Erfassen der Verbrennungskammertemperatur innerhalb der zumindest einen Verbrennungskammer,
wobei Hilfskraftstoff während dem Betrieb der Gasbrennkraftmaschine in das Einlassverteilerrohr (14) zum Betreiben der Gasbrennkraftmaschine (10) zugeführt wird, wenn die Verbrennungskammertemperatur kleiner als ein vorbestimmter Verbrennungskammertemperaturschwellenwert ist.

## Claims

1. Gas internal combustion engine (10) for vehicles, having:
- at least one combustion chamber, which is designed to receive an air/gas fuel mixture for combustion of same therein,
- an intake manifold (14), which is fluidically connected to the at least one combustion chamber and is designed to feed the air/gas fuel mixture to the at least one combustion chamber at specified times for combustion, and
- an auxiliary starting system (30) for starting the gas internal combustion engine (10), wherein the auxiliary starting system (30) has:
- an auxiliary fuel tank (32), which is designed to store an auxiliary fuel,
- a control valve (34), which is designed to open or close a connection between the auxiliary fuel tank (32) and the intake manifold (14),
- an ambient temperature sensor (36), which is designed to produce a signal that indicates the ambient temperature of the gas internal combustion engine (10),
- a crankshaft speed sensor (42), which is designed to produce a signal which indicates the crankshaft speed of a crankshaft of the gas internal combustion engine (10), and
- a control unit (38), which is designed to receive the signal from the ambient temperature sensor (36) and the signal from the crankshaft speed sensor (42) and to control the control valve (34) in order to open same, with the result that auxiliary fuel is fed from the auxiliary fuel tank (32) into the intake manifold (14) in order to start the gas internal combustion engine (10), if the ambient temperature is lower than a specified ambient temperature threshold,
wherein the control unit (38) is furthermore designed to control the control valve (34) in order to open same until the crankshaft speed is higher than a specified crankshaft speed threshold.

2. Gas internal combustion engine (10) according to Claim 1, furthermore having a device for detecting combustibility within the at least one combustion chamber,
wherein the control unit (38) is furthermore designed to control the control valve (34) in order to open same during the operation of the gas internal combustion engine (10), with the result that auxiliary fuel is fed from the auxiliary fuel tank (34) into the intake manifold (14) in order to operate the gas internal combustion engine (10), if the detected combustibility is lower than a specified combustibility.

3. Gas internal combustion engine (10) according to either of the preceding claims, furthermore having a main gas fuel quality sensor (22), which is designed to detect a signal which indicates the quality of the main gas fuel,
wherein the control unit (38) is furthermore designed to control the control valve (34) in order to open same during the operation of the gas internal combustion engine (10), with the result that auxiliary fuel is fed from the auxiliary fuel tank (32) into the intake manifold (14) in order to operate the gas internal combustion engine (10), if the gas fuel quality is outside a specified gas fuel quality range.

4. Gas internal combustion engine (10) according to one of the preceding claims, furthermore having an air mass meter (48), which is arranged on the intake manifold (14) and is designed to produce a signal which indicates the combustion air mass flowing into the intake manifold (14),
wherein the control unit (38) is designed to adjust the opening time of the control valve (34) in such a way that an auxiliary fuel quantity stoichiometrically required for the combustion air mass flowing into the intake manifold (14) is fed into the intake manifold (14) from the auxiliary fuel tank (32).

5. Gas internal combustion engine (10) according to one of the preceding claims, wherein the auxiliary fuel comprises dimethyl ether.

6. Gas internal combustion engine (10) according to one of the preceding claims, furthermore having at least one ignition device, which is designed to ignite the air/main gas fuel mixture and/or the air/auxiliary fuel mixture and/or the air/main gas fuel and auxiliary fuel mixture within the at least one combustion chamber.

7. Method for operating a gas internal combustion engine (10) which has at least one combustion chamber, which is designed to receive an air/gas fuel mixture for combustion of same therein, and an intake manifold (14), which is fluidically connected to the at least one combustion chamber and is designed to feed the air/main gas fuel mixture to the at least one combustion chamber at specified times for combustion, wherein the method comprises the following steps:
- detecting the ambient temperature of the gas internal combustion engine (10),
- detecting the crankshaft speed of a crankshaft of the gas internal combustion engine (10), and
- feeding auxiliary fuel into the intake manifold (14) in order to start the gas internal combustion engine (10) if the ambient temperature is lower than a specified ambient temperature threshold,
wherein the auxiliary fuel is fed into the intake manifold (14) until the crankshaft speed is higher than a specified crankshaft speed threshold.

8. Method according to Claim 7, furthermore comprising:
- detecting the combustion chamber temperature within the at least one combustion chamber,
wherein, during the operation of the gas internal combustion engine, auxiliary fuel is fed into the intake manifold (14) to operate the gas internal combustion engine (10) if the combustion chamber temperature is lower than a specified combustion chamber temperature threshold.

## Revendications

1. Moteur à combustion interne à gaz (10) pour véhicules, comprenant :
- au moins une chambre de combustion qui est réalisée pour recevoir un mélange air/carburant gazeux pour la combustion de celui-ci dans cette chambre,
- un tuyau distributeur d'admission (14) qui est relié fluidiquement à l'au moins une chambre de combustion et réalisé pour acheminer le mélange air/carburant gazeux à l'au moins une chambre de combustion à des instants prédéfinis pour la combustion, et
- un système de démarrage auxiliaire (30) pour le démarrage du moteur à combustion interne à gaz (10), le système de démarrage auxiliaire (30) comprenant :
- un réservoir de carburant auxiliaire (32) qui est réalisé pour stocker un carburant auxiliaire,
- une soupape de commande (34) qui est réalisée pour ouvrir ou fermer une liaison entre le réservoir de carburant auxiliaire (32) et le tuyau distributeur d'admission (14),
- un capteur de température ambiante (36) qui est réalisé pour produire un signal qui indique la température ambiante du moteur à combustion interne à gaz (10),
- un capteur de vitesse de rotation de vilebrequin (42) qui est réalisé pour produire un signal qui indique la vitesse de rotation d'un vilebrequin du moteur à combustion interne à gaz (10), et
- une unité de commande (38) qui est réalisée pour recevoir le signal du capteur de température ambiante (36) et le signal du capteur de vitesse de rotation de vilebrequin (42) et pour commander la soupape de commande (34) pour l'ouverture, de sorte que le carburant auxiliaire soit acheminé à partir du réservoir de carburant auxiliaire (32) dans le tuyau distributeur d'admission (14) pour le démarrage du moteur à combustion interne à gaz (10) lorsque la température ambiante est inférieure à une valeur seuil de température ambiante prédéfinie,
l'unité de commande (38) étant en outre réalisée pour commander la soupape de commande (34) pour l'ouverture jusqu'à ce que la vitesse de rotation de vilebrequin soit supérieure à une valeur seuil de vitesse de rotation de vilebrequin prédéfinie.

2. Moteur à combustion interne à gaz (10) selon la revendication 1, comprenant en outre un dispositif de détection de l'aptitude à l'allumage à l'intérieur de l'au moins une chambre de combustion,
l'unité de commande (38) étant en outre réalisée pour commander la soupape de commande (34) pour l'ouverture pendant le fonctionnement du moteur à combustion interne à gaz (10), de sorte que du carburant auxiliaire soit acheminé à partir du réservoir de carburant auxiliaire (34) dans le tuyau distributeur d'admission (14) pour le fonctionnement du moteur à combustion interne à gaz (10) lorsque l'aptitude à l'allumage détectée est inférieure à une aptitude à l'allumage prédéfinie.

3. Moteur à combustion interne à gaz (10) selon l'une des revendications précédentes, comprenant en outre un capteur de qualité de carburant gazeux principal (22) qui est réalisé pour acquérir un signal qui indique la qualité du carburant gazeux principal,
l'unité de commande (38) étant en outre réalisée pour commander la soupape de commande (34) pour l'ouverture pendant le fonctionnement du moteur à combustion interne à gaz (10), de sorte que du carburant auxiliaire soit acheminé à partir du réservoir de carburant auxiliaire (32) dans le tuyau distributeur d'admission (14) pour le fonctionnement du moteur à combustion interne à gaz (10) lorsque la qualité de carburant gazeux est en dehors d'une plage de qualité de carburant gazeux prédéfinie.

4. Moteur à combustion interne à gaz (10) selon l'une des revendications précédentes, comprenant en outre un dispositif de mesure de masse d'air (48) disposé sur le tuyau distributeur d'admission (14), lequel dispositif est réalisé pour produire un signal qui indique la masse d'air de combustion affluant dans le tuyau distributeur d'admission (14),
l'unité de commande (38) étant réalisée pour régler la durée d'ouverture de la soupape de commande (34) de telle sorte qu'une quantité de carburant auxiliaire nécessaire du point de vue stœchiométrique pour la masse d'air de combustion affluant dans le tuyau distributeur d'admission (14) soit acheminée à partir du réservoir de carburant auxiliaire (32) dans le tuyau distributeur d'admission (14).

5. Moteur à combustion interne à gaz (10) selon l'une des revendications précédentes, le carburant auxiliaire comprenant du diméthyléther.

6. Moteur à combustion interne à gaz (10) selon l'une des revendications précédentes, comprenant en outre au moins un dispositif d'allumage qui est réalisé pour allumer le mélange air/carburant gazeux principal et/ou le mélange air/carburant auxiliaire et/ou le mélange air/carburant gazeux principal/carburant auxiliaire à l'intérieur de l'au moins une chambre de combustion.

7. Procédé de fonctionnement d'un moteur à combustion interne à gaz (10) qui comprend au moins une chambre de combustion qui est réalisée pour recevoir un mélange air/carburant gazeux pour la combustion de celui-ci dans cette chambre, et un tuyau distributeur d'admission (14) qui est relié fluidiquement à l'au moins une chambre de combustion et réalisé pour acheminer le mélange air/carburant gazeux principal à l'au moins une chambre de combustion à des instants prédéfinis pour la combustion, le procédé comportant les étapes :
- détecter la température ambiante du moteur à combustion interne à gaz (10),
- détecter la vitesse de rotation d'un vilebrequin du moteur à combustion interne à gaz (10), et
- acheminer du carburant auxiliaire dans le tuyau distributeur d'admission (14) pour le démarrage du moteur à combustion interne à gaz (10) lorsque la température ambiante est inférieure à une valeur seuil de température ambiante prédéfinie,
le carburant auxiliaire étant acheminé dans le tuyau distributeur d'admission (14) jusqu'à ce que la vitesse de rotation de vilebrequin soit supérieure à une valeur seuil de vitesse de rotation de vilebrequin prédéfinie.

8. Procédé selon la revendication 7, comprenant en outre :
- détecter la température à l'intérieur de l'au moins une chambre de combustion,
du carburant auxiliaire étant, pendant le fonctionnement du moteur à combustion interne à gaz, acheminé dans le tuyau distributeur d'admission (14) pour le fonctionnement du moteur à combustion interne à gaz (10) lorsque la température de chambre de combustion est inférieure à une valeur seuil de température de chambre de combustion prédéfinie.
